# EUROPEAN PATENT SPECIFICATION

(11) **EP 3 442 331 B1**
(45) Date of publication and mention of the grant of the patent: **06.07.2022**
(21) Application number: 17734501.4
(22) Date of filing: 05.04.2017
(51) Int. Cl.: A01M 7/00

(54) **SPRAYING DEVICE FOR SPRAYING LIQUID ONTO CROPS**
SPRÜHVORRICHTUNG ZUM SPRÜHEN VON FLÜSSIGKEIT AUF ERNTEGUT
DISPOSITIF DE PULVÉRISATION POUR PULVÉRISER DU LIQUIDE SUR DES CULTURES

(30) Priority: 10.04.2016 NL 2016579; 13.04.2016 NL 2016599
(43) Date of publication of application: 20.02.2019
(73) Proprietor: Hoeben, Henricus Johannes Godefridus Maria, 6026 RH Maarheeze (NL)
(72) Inventor: Hoeben, Henricus Johannes Godefridus Maria, 6026 RH Maarheeze (NL)
(74) Representative: Verhees, Godefridus Josephus Maria
(86) International application number: PCT/NL2017/050214
(87) International publication number: WO 2017/179973

(56) References cited:
- EP-A2- 0 326 045
- EP-A2- 2 098 117
- WO-A2-2012/005584
- CN-U- 201 479 785

## Description

### Technical filed of the invention

The invention relates to a spraying device for spraying liquid onto crops comprising:
- an elongated suspension element with which the spraying device can be coupled to an agricultural tractor,
- a plurality of blade carriers connected to the suspension element,
- an elongate blade which is connected to the blade carriers and is parallel to the suspension element, which blade extends horizontally in longitudinal direction,
- a plurality of nozzle carriers connected to the suspension element, which nozzle carriers are spaced apart from the blade carriers,
- a plurality of nozzles connected to the nozzle carriers and present on the side of the nozzle carriers facing away from the blade, wherein during use the nozzles are present above the blade and
- at least one elongated further blade which is present at a distance from the blade and is connected to the nozzle carriers and is also parallel to the suspension element and also extends horizontally in longitudinal direction, with the nozzles being present on the side of the further blade facing away from the blade.

The spraying device is usually attached to a spray boom applied to an agricultural tractor. During use, the suspension element extends longitudinally, usually at a right angle (also angularly) to the direction of travel of the agricultural tractor and horizontally. The spray boom is an elongated and usually foldable frame that during operation, ie during spraying of crops with the sprayer being moved over the crops, is present on the agricultural tractor with its the longitudinal direction transverse to the direction of movement. The suspension element extends parallel to the spray boom and is connected to the spray boom.

### Background of the invention

Such a spraying device is known from www.youtube.com/watch?v=QTE7Y744Qd0. In this known spraying device, the nozzles are present on the blade and the blade is kept spaced above the crop by the wind. The air flowing underneath the blade takes along the spraying liquid to the crops.

### Summary of the invention

An object of the invention is to improve the known spraying device. More specifically, the object of the invention is to ensure that the spraying liquid is better sprayed on the crops and that less spray liquid is lost to the environment (soil, slots along fields). To this end, the spraying device according to the invention is characterized in that the spraying device comprises further nozzles which are also connected to the nozzle carriers and are directed in the same direction as the nozzles and are present on the side of the further blade facing the blade. The further nozzles preferably blow air out. This air flow coming from the further nozzles increases the air flow due to the movement of the further blade over the crops during movement of the spraying device. As a consequence, the spray liquid sprayed out of the nozzles is fed even better to the crops. During operation, ie during movement of the spraying device, the air flow deflected by the further blade will flow under the nozzles and will guide the spray liquid coming out of the nozzles better to the crops and prevents that the spraying liquid reaches the bottom where it cannot perform its operation. It has been found that using the spraying device according to the invention spray liquid even is present at the bottom of the leaves of the crops (which is highly desirable) because the air flow with entrained spray liquid will come into turbulence in the crops. This is especially advantageous at low movement speeds of the spraying device, with a low air flow caused by this movement. This is especially the case when the sprayer is used in boxes where the sprayer is moved less quickly over the crops.

An embodiment of the spraying device according to the invention is characterized in that the further nozzles are present closer to the suspension element than the nozzles. As a result, they can fed the spray liquid sprayed out of the nozzles even better to the crops.

A further embodiment of the spraying device according to the invention is characterized in that seen in the longitudinal direction of the suspension element the further nozzles are located substantially in the middle of the nozzles. As a result, the spraying fluid is even better fed to the crops.

Preferably, the blade and the further blade are planar or substantially planar and, preferably, during use the further blade is present above a first imaginary plane in which the blade extends and the nozzles are present above a second imaginary plane in which the further blade extends. Here, flat is intended to be not bent or only slightly bent.

Preferably, during use the further nozzles are present below the second imaginary plane and above the first imaginary plane. in which the blade extends and are present underneath a second imaginary plane (17). The spray nozzles and further spray nozzles can be connected directly to the sprayers or can be mounted on the blades and thus being connected to the sprayers indirectly.

### Brief description of the drawings

The invention will be further elucidated below on the basis of drawings. These drawings show an embodiment of the spraying device according to the present invention. In the drawings:
Figure 1 is an embodiment of the spraying device according to the invention; and
Figure 2 is a cross section of the spraying device.

### Detailed description of the drawings

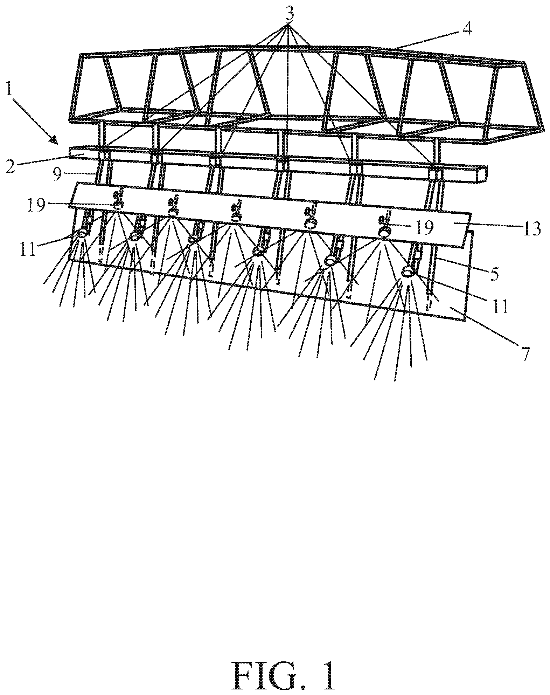

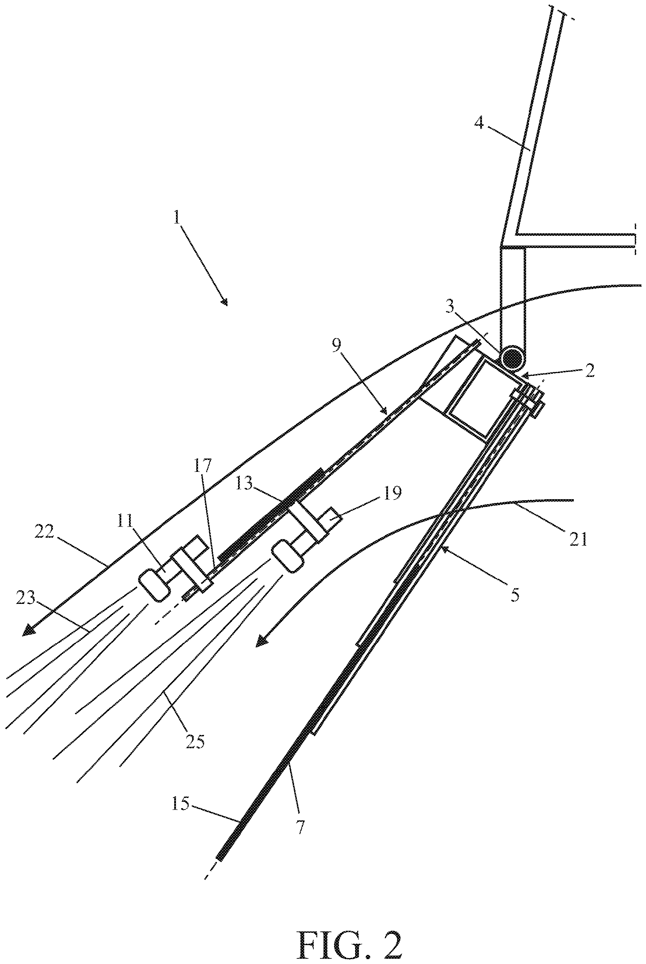

In Figures 1 and 2, a spraying device 1 according to the invention is shown in perspective and cross-section, respectively. The spraying device 1 has an elongate suspension element 2 which is coupled via hinges 3 to a frame 4 of a spray boom and is parallel to this frame 4. This spray boom can be applied to an agricultural tractor. During operation, the frame extends substantially horizontally and perpendicularly to the direction of travel of the agricultural tractor. A plurality of blade carriers 5 on which a blade 7 is present are attached to the suspension element. In operation, the blade extends horizontally in longitudinal direction. The blade carriers are straight and slightly bendable. Nozzle carriers 9 are also attached to the suspension element 2 and are spaced apart from the blade carriers. Nozzles 11 for spraying spray liquid on crops are present on these nozzle carriers. The nozzles 11 are present at the side of the blade remote from the nozzle carriers. During use, the nozzles 11 are spaced above the blade 7.

The spraying device further has an elongate further blade 13 which is spaced apart from the blade 7 and is connected to the nozzle carriers 9. This further blade is also parallel to the suspension element 2 and also extends horizontally in longitudinal direction. The nozzles 11 are present on the side of the further blade 13 remote from the blade 7. The blade 7 and the further blade 13 are flat (or slightly bent). In use, the further blade 13 is present above a first imaginary plane 15 in which the blade 7 extends, and the nozzles 11 are above a second imaginary plane 17 in which the further blade extends.

Further, the spraying device has further nozzles 19 for blowing air to better guide the spray liquid out of the nozzles to the crops. These further nozzles 19 are also connected to the nozzle carriers 9. These further nozzles are directed in the same direction as the nozzles 11 and are present on the side of the further blade 13 facing the blade 7. During use, the further nozzles 19 are present under the second imaginary plane 17 and above the first imaginary plane 15. The further nozzles 19 are preferably closer to the suspension element 2 than the nozzles 11. In the longitudinal direction of the suspension element 2, the further nozzles 19 are located at least substantially in the middle between the nozzles 11, see Figure 1. In this figure, it is also clear visible on which way the further nozzles 19 blow air 25 under the spray nozzles 11 and below the spray liquid 23 injected by the further nozzles 19.

In Figure 2, this air flow 25 and flow of spray liquid 23 are clearly seen from side view. With arrow 21 the direction of the air flow as a result of the movement of the spraying device 1 is indicated. Due to the air flow deflected downwardly and indicated by arrow 21, there will be an area of negative pressure above the blade 7 which deflects the air flow indicated by arrow 22, which passes between the suspension element 2 and the frame 4, downwardly. As a result, the spray liquid is trapped between two air currents, indicated by arrows 21 and 22, so that practically nothing can reach the environment or on the bottom. Hereby it is clear that the air blown from the further nozzles 19 supports the air flow indicated by arrow 21.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims. For example, instead of the further blade shown here, there may be several shorter further blades present next to each other on the nozzle carriers.

## Claims

1. A spraying device (1) for spraying liquid onto crops comprising:
- an elongated suspension element (2) with which the spraying device can be coupled to an agricultural tractor (4),
- a plurality of blade carriers (5) connected to the suspension element,
- an elongate blade (7) which is connected to the blade carriers and is parallel to the suspension element, which blade extends horizontally in longitudinal direction,
- a plurality of nozzle carriers (9) connected to the suspension element (2), which nozzle carriers are spaced apart from the blade carriers,
- a plurality of nozzles (11) connected to the nozzle carriers and present on the side of the nozzle carriers facing away from the blade, wherein during use the nozzles are present above the blade, and
- at least one elongated further blade (13) which is present at a distance from the blade (7) and is connected to the nozzle carriers (9) and is also parallel to the suspension element (2) and also extends horizontally in longitudinal direction, with the nozzles (11) being present on the side of the further blade facing away from the blade,
**characterized in that** the spraying device comprises further nozzles (19) which are also connected to the nozzle carriers (9) and are directed in the same direction as the nozzles (11) and are present on the side of the further blade (13) facing the blade (7).

2. A spraying device according to claim 1, **characterized in that** the further nozzles (19) are present closer to the suspension element (2) than the nozzles (11).

3. A spraying device according to claim 1 or 2, **characterized in that** seen in the longitudinal direction of the suspension element (2) the further nozzles (19) are located substantially in the middle of the nozzles (11).

4. A spraying device according to claim 1, 2 or 3, **characterized in that** during use the further blade (13) is present at a distance above and in front of the blade (7) and the nozzles (11) are present on the side of the further blade facing away from the blade.

5. A spraying device according to claim 4, **characterized in that** the blade and the further blade are planar or substantially planar.

6. A spraying device according to claim 4 or 5, **characterized in that** during use the further blade is present above a first imaginary plane in which the blade extends and the nozzles are present above a second imaginary plane in which the further blade extends.

7. A spraying device according to claim 4, 5 or 6, **characterized in that** during use the further nozzles (19) are present above a first imaginary plane (15) in which the blade extends and are present underneath a second imaginary plane (17) In which the further blade extends.

## Patentansprüche

1. Sprühvorrichtung (1) zum Sprühen von Flüssigkeit auf Feldfrüchte, umfassend:
- ein längliches Aufhängungselement (2), mit dem die Sprühvorrichtung an einen Ackerschlepper (4) ankuppelbar ist,
- mehrere mit dem Aufhängungselement verbundene Blattträger (5),
- ein mit den Blattträgern verbundenes und parallel zum Aufhängungselement verlaufendes langgestrecktes Blatt (7), das sich horizontal in Längsrichtung erstreckt,
- mehrere mit dem Aufhängungselement (2) verbundene Düsenträger (9), die von den Blattträgern beabstandet sind,
- mehrere Düsen (11), die mit den Düsenträgern verbunden sind und auf der der Klinge abgewandten Seite der Düsenträger vorhanden sind, wobei die Düsen im Gebrauch oberhalb der Klinge vorhanden sind, und
- mindestens eine längliche weitere Blatt (13), die im Abstand von der Blatt (7) vorhanden ist und mit den Düsenträgern (9) verbunden ist und ebenfalls parallel zum Aufhängungselement (2) ist und sich ebenfalls horizontal in Längsrichtung erstreckt, wobei die Düsen (11) auf der der Blatt abgewandten Seite der weiteren Blatt vorhanden sind,
**dadurch gekennzeichnet, dass** die Sprühvorrichtung weitere Düsen (19) umfasst, die ebenfalls mit den Düsenträgern (9) verbunden sind und in die gleiche Richtung wie die Düsen (11) gerichtet sind und auf der der weiteren Klinge (13) zugewandten Seite vorhanden sind die Klinge (7).

2. Sprühvorrichtung nach Anspruch 1, **dadurch gekennzeichnet, dass** die weiteren Düsen (19) näher am Aufhängungselement (2) vorhanden sind als die Düsen (11).

3. Sprühgerät nach Anspruch 1 oder 2, **dadurch gekennzeichnet, dass** die weiteren Düsen (19) in Längsrichtung des Aufhängungselements (2) gesehen im wesentlichen in der Mitte zwischen der Düsen (11) angeordnet sind.

4. Sprühgerät nach Anspruch 1, 2 oder 3, **dadurch gekennzeichnet, dass** während des Gebrauchs das weitere Blatt (13) in einem Abstand oberhalb und vor dem Blatt (7) vorhanden ist und die Düsen (11) an dem vorhanden sind Seite des weiteren Blattes, die vom Blatt abgewandt ist.

5. Sprühvorrichtung nach Anspruch 4, **dadurch gekennzeichnet, dass** das Blatt und das weitere Blatt eben oder im Wesentlichen eben sind.

6. Sprühvorrichtung nach Anspruch 4 oder 5, **dadurch gekennzeichnet, dass** während des Gebrauchs das weitere Blatt oberhalb einer ersten gedachten Ebene vorhanden ist, in der sich das Blatt erstreckt, und die Düsen oberhalb einer zweiten gedachten Ebene vorhanden sind, in der sich das weitere Blatt erstreckt.

7. Sprühvorrichtung nach Anspruch 4, 5 oder 6, **dadurch gekennzeichnet, dass** die weiteren Düsen (19) während des Gebrauchs oberhalb einer ersten gedachten Ebene (15), in der sich das Blatt erstreckt, und unterhalb einer zweiten gedachten Ebene (17) in die sich das weitere Blatt erstreckt vorhanden sind.

## Revendications

1. Dispositif de pulvérisation (1) pour pulvériser du liquide sur les cultures comprenant :
- un élément de suspension allongé (2) avec lequel le dispositif de pulvérisation peut être couplé à un tracteur agricole (4),
- une pluralité de porte-lames (5) reliés à l'élément de suspension,
- une lame allongée (7) reliée aux porte-lames et parallèle à l'élément de suspension, laquelle lame s'étend horizontalement dans le sens longitudinal,
- une pluralité de porte-buses (9) reliés à l'élément de suspension (2), lesquels porte-buses sont espacés des porte-lames,
- une pluralité de buses (11) connectées aux porte-buses et présentes sur le côté des porte-buses tourné à l'opposé de la lame, les buses étant présentes au-dessus de la lame pendant l'utilisation, et
- au moins une autre lame allongée (13) qui est présente à distance de la lame (7) et est reliée aux porte-buses (9) et est également parallèle à l'élément de suspension (2) et s'étend également horizontalement dans la direction longitudinale, les buses (11) étant présentes sur le côté de l'autre lame tourné à l'opposé de la lame,
**caractérisé en ce que** le dispositif de pulvérisation comprend d'autres buses (19) qui sont également reliées aux porte-buses (9) et sont dirigées dans la même direction que les buses (11) et sont présentes sur le côté de l'autre lame (13) faisant face la lame (7).

2. Dispositif de pulvérisation selon la revendication 1, **caractérisé en ce que** les autres buses (19) sont présentes plus près de l'élément de suspension (2) que les buses (11).

3. Dispositif de pulvérisation selon la revendication 1 ou 2, **caractérisé en ce que** vu dans la direction longitudinale de l'élément de suspension (2) les autres buses (19) sont situées sensiblement au milieu entre les buses (11).

4. Dispositif de pulvérisation selon la revendication 1, 2 ou 3, **caractérisé en ce que** pendant l'utilisation l'autre lame (13) est présente à distance au-dessus et devant la lame (7) et les buses (11) sont présentes sur le côté de l'autre lame tourné à l'opposé de la lame.

5. Dispositif de pulvérisation selon la revendication 4, **caractérisé en ce que** la lame et l'autre lame sont planes ou sensiblement planes.

6. Dispositif de pulvérisation selon la revendication 4 ou 5, **caractérisé en ce que** pendant l'utilisation la autre lame est présente au-dessus d'un premier plan imaginaire dans lequel s'étend la lame et les buses sont présentes au-dessus d'un deuxième plan imaginaire dans lequel s'étend la autre lame.

7. Dispositif de pulvérisation selon la revendication 4, 5 ou 6, **caractérisé en ce que** pendant l'utilisation les autres buses (19) sont présentes au-dessus d'un premier plan imaginaire (15) dans lequel s'étend la lame et sont présentes au-dessous d'un deuxième plan imaginaire (17) dans lequel s'étend la autre lame.
